# EUROPEAN PATENT APPLICATION

(11) **EP 1 633 034 A2**
(43) Date of publication of application: **08.03.2006**
(21) Application number: 05018179.1
(22) Date of filing: 22.08.2005
(51) Int. Cl.: H02K 7/06

(54) **Vibrating motor and portable terminal apparatus using same**

(30) Priority: 03.09.2004 JP 2004257605
(71) Applicant: Minebea Matsushita Motor Co., Ltd., Meguro-ku Tokyo (JP)
(72) Inventor: Matsubara, Masaaki, 210-5, Nihongi Yonago-shi Tattori (JP); Sato, Kazuaki, 210-5, Nihongi Yonago-shi Tattori (JP); Furuta, Osamu, 210-5, Nihongi Yonago-shi Tattori (JP); Umehara, Mikio, 210-5, Nihongi Yonago-shi Tattori (JP)
(74) Representative: Kramer - Barske - Schmidtchen

(57) **Abstract**

A vibrating motor including a stepping motor in which control is simple, large vibration is generated, and drive torque can be efficiently generated, and a portable terminal apparatus using the same are provided. The vibrating motor includes a single-phase annular stator coil, a stator yoke disposed to surround the periphery of the single-phase annular stator coil and having pole teeth, an interface board fixing the stator yoke and having a wiring connected to the annular stator coil, plural arc-shaped magnets disposed to be opposite to the pole teeth and to be capable of rotating around a rotating shaft, and an eccentric weight capable of rotating around the rotating shaft.

## Description

### FIELD OF THE INVENTION

The present invention relates to a vibrating motor including a vibration mechanism used for vibration generation of, for example, a cellular phone and a portable terminal apparatus using the same.

### BACKGROUND OF THE INVENTION

A DC (direct current) motor with brush was used for vibration generation of an initial cellular phone. Since semiconductor integrated technology in those days was less advanced, it was difficult to specially produce a circuit including also a control circuit of a motor in the narrow cellular phone, and the DC motor with brush was used mainly since its cost was low and trouble seldom occurred. The DC motor with brush is classified into various types according to use place or use. In a cylinder type which is incorporated in a watch or the like, since the rotation surface of a shaft is in the thickness direction of the watch, the reduction in thickness is difficult, and it is difficult to provide an external eccentric weight in order to obtain a vibration amount. In a coin type, the reduction in thickness can be achieved, however, its lifetime is short, a start time and a stop time become long, and its control becomes difficult.

Besides, in the case of a brushless motor in those days, since there is no brush, there is a merit that the maintenance becomes easy. However, a driver circuit, a rotor position detection circuit, a polarity switching circuit, and the like are needed. Thus, there has been a problem that these circuits are expensive, and the structure becomes complicated.

Thereafter, the semiconductor integrated technology has been advanced, and it has been able to afford to incorporate a control circuit of a brushless motor or the like, and therefore, the control circuit of the brushless motor can be incorporated for vibration generation.

Since the brushless motor has no brush, its lifetime is very long (high reliability), the vibration amount can be adjusted by rotation speed control using frequency, and the structure becomes simple.

Especially, in the case of a cellular phone, since it is necessary to incorporate various functions, as the number of mounted elements of an integrated circuit and the capacity of a memory becomes exponentially large, it becomes possible to easily incorporate a simple circuit.

From the background as stated above, with respect to examples in which a stepping motor is used as a vibrating motor, only several examples limited to special uses, including, for example, an example described in JP-A-9-252573, are reported, and there are few examples for general use.

JP-A-9-252573 discloses a vibrating motor on the assumption that it is incorporated in a watch case.

Figs. 6A-6C are structural views of one type of vibrating motor, which is disclosed in JP-A-9-252573. Fig. 6A is a view showing a magnetic circuit of the vibrating motor disclosed in JP-A-9-252573, Fig. 6B is a characteristic explanation view of the vibrating motor, and Fig. 6C is an external appearance view of the vibrating motor.

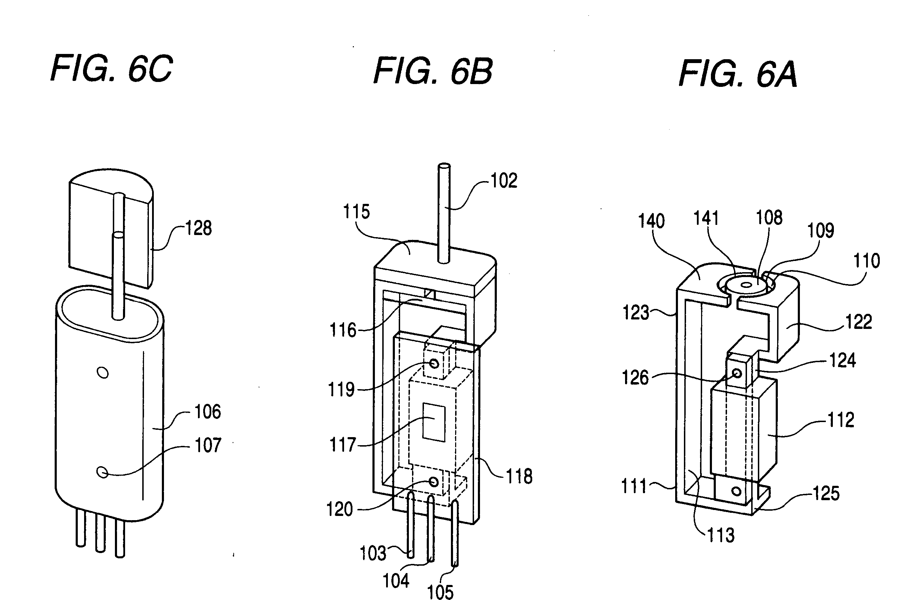

The magnetic circuit of a stepping motor of Fig. 6A includes a rotor 109 made of a bipolar permanent magnet 108, a coil 112 including an exciting coil and a detection coil for detecting the rotation position of the rotor, and a bipolar stator 111 including a flat part 140 magnetically coupled with the rotor 109 through a gap 110 and having a rotor hole 141 for housing and disposing the rotor 109, two connection parts 122 and 123 formed by bending at substantially right angles with respect to the flat part 140, and connection end parts 124 and 125 bent to be connected to core end parts 126 of the coil 112. Wide surfaces of the connection end parts 124 and 125 and wide surfaces of the core end parts 126 are connected with each other at the same surface. In order to avoid a magnetic short circuiting between the stator 111 and the coil 112, a wide surface 113 of the connection part 123 is opposite to a narrow surface of the core of the coil 112.

Next, the feature of the stepping motor will be described with reference to Fig. 6B. A rotor shaft 102 of the rotor 109 is received by two rotor bearings 115 and 116, and the rotor shaft 102 and the coil 112 are disposed in a cylindrical shaft direction. A circuit board 118 which includes a driver IC 117 of the stepping motor, two power terminals 103 and 104 and a control terminal 105 and is disposed so that its longitudinal direction becomes the direction of a cylindrical shaft, the stator 111 and the coil 112 are fixed by screws 119 and 120 to a frame 106 through screw holes 107 provided in the frame 106 (Fig. 6C). A coil terminal of the coil 112 is adhered and conducted to each coil connection pattern (not shown) of the circuit board 118.

From the above description, the stepping motor can adopt the cylindrical shape structure including the rotor 109 made of the bipolar permanent magnet 108, the bipolar stator 111, the coil 112, and the circuit board 118. That is, according to the above structure, the arrangement can be made so that the direction of magnetic field generated by the coil 112 intersects with the rotation plane of the rotor 109.

Fig. 6C is an external appearance view of the stepping motor with an eccentric weight. The stepping motor with the eccentric weight is such that an eccentric weight 128 is fixed to one end side of the rotor shaft 102 of the stepping motor so that the vibration surface of the eccentric weight 128 becomes perpendicular to the rotor shaft 102.

In the above vibrating motor using the stepping motor, when the single-phase stepping motor is used, the structure is simple and the control circuit can be easily structured, and this is advantageous. However, there have been problems as follows.
(1) Since the number of magnetic poles is two, the control mode of two steps per rotation occurs. Thus, uses are specified, and it has been difficult to use for an arbitrary use.
(2) Since the bipolar stator is disposed to be opposite to the rotor made of the bipolar permanent magnet, it becomes difficult to uniformly generate the torque for rotation around the rotor. Besides, since the number of poles is small, the rotation angle per pole becomes large, and it becomes difficult to adjust start characteristics and stop characteristics.
(3) Since the number of magnetic poles is two, the rotation angle per pole becomes large, and it becomes difficult to make an angle adjustment of a fine rotation angle.
(4) Means for determining a rotation direction is complicated, and the control of a starting time and a current value has been difficult.
(5) Since the eccentric weight is provided to the one end of the rotor shaft, the eccentric weight is supported in a cantilever manner using only one side, and vibration generation at high speed rotation has been difficult.
(6) In the related art vibrating motor, the stepping motor itself has the long structure in the rotor shaft direction, and further, the eccentric weight is provided to the one end of the rotor shaft. Thus, as a whole, the vibrating motor is long in the rotor shaft direction, and an objective apparatus to which it can be attached is limited on the ground of a housing space. For example, when consideration is given to the application to a cellular phone, in order that vibration can be sensed even if it is put in a pocket or the like, rather strong vibration energy is required, and in order to satisfy that, the vibrating motor becomes long in the rotor shaft direction and becomes large, and the mounting becomes difficult.

### SUMMARY OF THE INVENTION

An object of an illustrative, non-limiting embodiment of the invention is to overcome the disadvantage described above, and to provide a vibrating motor including a stepping motor in which control is simple, large vibration is generated, and drive torque can be efficiently generated, and to provide a portable terminal apparatus using the same. Also, the invention is not required to overcome the disadvantage described above, and an illustrative, non-limiting embodiment of the invention may overcome different disadvantages or may not overcome any disadvantages.

An illustrative, non-limiting embodiment of a vibrating motor of the invention is characterized in that a single-phase annular stator coil is surrounded by a stator yoke having pole teeth, an arc-shaped magnet is rotatably disposed along the stator yoke so as to be opposite to the pole teeth, and an arc-shaped eccentric weight is rotatably disposed outside the stator yoke in a radial direction.

An illustrative, non-limiting embodiment of a portable terminal apparatus of the invention uses, as a vibrating motor used therefor, the vibrating motor basically having the above structure.

Specifically, following means are adopted.
(1) A vibrating motor includes a stepping motor that includes a single-phase annular stator coil, a stator yoke disposed to surround the periphery of the single-phase annular stator coil and having pole teeth, an interface board fixing the stator yoke and having a wiring connected to the single-phase annular stator coil, and a rotor including a rotating shaft, and an arc-shaped magnet opposite to the pole teeth, and an eccentric weight.
(2) The vibrating motor recited in (1), wherein the magnet includes an arc-shaped rotor magnet with a magnetization pitch substantially equal to a pole teeth pitch of the stator yoke, and a commutating-pole magnet with another magnetization pitch shifted in a rotation direction of the rotor with respect to the pole teeth pitch of the stator yoke, and the commutating-pole has a magnetic flux amount larger than that of the rotor magnet.
(3) The vibrating motor recited in (2), wherein the commutating-pole magnet has a monopole-magnetized surface. That is, the commutating-pole magnet has a surface opposite to the pole teeth, and the surface is one of an N pole and an S pole.
(4) The vibrating motor recited in (1), wherein the magnet includes an arc-shaped rotor magnet with a magnetization pitch different from a pole teeth pitch of the stator yoke, and a gap between a pole teeth area of the stator yoke and a magnetization pitch area of the arc-shaped rotor magnet is changed in a partial area of a remaining portion except a center portion of one of the pole teeth area and the magnetization pitch area. (That is, a gap between a pole tooth of the stator yoke and an area corresponding to one pole of the magnet is uneven.)
(5) The vibrating motor recited in any one of (1) to (4), wherein the magnet is magnetized in a radial direction.
(6) The vibrating motor recited in any one of (1) to (5), wherein the stator coil is formed by winding and fusion-bonding a self-bonding wire.
(7) The vibrating motor recited in any one of (1) to (6), wherein the rotor further includes a rotor frame around the rotating shaft, the rotor frame having the eccentric weight to be positioned around the rotating shaft and outside the stator yoke.
(8) The vibrating motor recited in any one of (1) to (7), wherein the stator yoke includes a first stator yoke having first pole teeth, a second stator yoke having second pole teeth, and a third stator yoke to position and couple the first and second stator yokes so that the first and second pole teeth engage with each other in a comb teeth shape, and the third stator yoke includes a bearing of the rotating shaft.
(9) The vibrating motor recited in (8), wherein phases of the first and second pole teeth are shifted so that a rotation direction of the rotor is determined.
(10) The vibrating motor recited in (8) is characterized in that a first pole tooth shape of the first stator yoke and a second pole tooth shape of the second stator yoke are asymmetric so that a rotation direction of the rotor is determined.
(11) The vibrating motor recited in any one of (8) to (10), wherein the magnet includes an arc-shaped rotor magnet, and a commutating-pole magnet, and the rotor further includes a rotor frame, the rotor frame having the eccentric weight, the arc-shaped rotor magnet, and the commutating-pole magnet.
(12) The vibrating motor recited in any one of (8) to (11), wherein the eccentric weight contains a magnetic material and has irregularities on a surface opposite to the stator yoke, the irregularities having a pitch substantially equal to the pole teeth of the stator yoke.
(13) A portable terminal apparatus including a vibrating motor recited in any one of (1) to (12).

According to an illustrative, non-limiting embodiment of a vibrating motor of the invention, control is simple, large vibration is generated, and drive torque can be efficiently generated.

Since the single-phase stepping motor is used, the structure is simple and the control circuit can be simply constructed.

Besides, since the single-phase stepping motor is pulse driven, the rotation speed can be controlled to be constant. Thus, when the pulse frequency is changed, the vibration can be greatly changed.

Besides, since the single-phase stepping motor is pulse driven, the rotation of the vibrating motor can be stopped. Accordingly, the vibration can be stopped in a short stop time.

Since the stator yoke having the pole teeth is provided to surround the single-phase annular stator coil, and the rotor and the like are rotatably provided along the stator yoke, reduction in thickness and high speed driving become possible.

Since the eccentric weight is disposed outside the annular stator yoke in the radial direction, the radius from the center can be made large, and strong vibration can be generated.

Since the magnet including the rotor magnet and the commutating-pole magnet are magnetized in the radial direction, the width of the magnetic pole, that is, an arc length in the embodiments becomes short (as compared with one magnetized in the circumferential direction), plural magnets can be closely disposed in the circumferential direction, and magnetization at a fine pitch becomes easy. Thus, a step width can be made narrow, and accordingly, the outer diameter of the vibrating motor can be made small.

Since the magnet including the rotor magnet and the commutating-pole magnet is magnetized in the radial direction, the adjustment of the stop position becomes easy.

Besides, in the case where the magnet is magnetized in the radial direction, plural magnets are closely disposed in the circumferential direction. By this, the magnetic pole arrangement at a fine pitch becomes easy. Further, an odd number of poles can be arranged, and the space is effectively used, and an efficient motor design becomes possible.

Since the stator coil is formed by winding and fusion-bonding the self-bonding wire, imbalance between the wound windings is suppressed, and the uniformity of arrangement can be realized. Besides, since a shift in the windings due to vibration or the like does not occur, the characteristics become stable.

Since the eccentric weight, the rotor magnet and the commutating-pole magnet are provided on the rotor frame, the rotation space can be shared, and the shape of the vibrating motor can be made small.

Since the eccentric weight contains the magnetic material, and the irregularities having a pitch substantially equal to the pole teeth of the stator yoke are provided on the surface opposite to the stator yoke, the drive force of the vibrating motor can be increased.

In an illustrative, non-limiting embodiment of a vibrating motor including the stepping motor of the invention, since the magnet with the shaft center and the eccentric weight are provided on the same rotation surface, a flat cylindrical shape can be formed, while high speed rotation is achieved, and strong vibration is generated.

Since an illustrative, non-limiting embodiment of a portable terminal apparatus of the invention uses the above vibrating motor, the vibrating motor is housed in an efficient small occupied space of a flat cylindrical shape, and the strong vibration required by the apparatus can be generated.

### BRIEF DESCRIPTION OF THE DRAWINGS

Figs. 1A and 1B are structural views of a vibrating motor including an outer rotor type stepping motor according to an illustrative, non-limiting embodiment of the invention.
Figs. 2A and 2B are explanatory views of another stop position control means according to an illustrative, non-limiting embodiment of the invention
Figs. 3A and 3B are explanatory views of stop position control means in a stator yoke according to an illustrative, non-limiting embodiment of the invention.
Fig. 4 is a diagram of a circuit for controlling drive current of a coil according to an illustrative, non-limiting embodiment of the invention.
Figs. 5A and 5B are structural views of an inner rotor type vibrating motor according to an illustrative, non-limiting embodiment of the invention.
Figs. 6A-6C are structural views of one type of vibrating motor shown in JP-A-9-252573.

### DETAILED DESCRIPTION OF THE INVENTION

Exemplary embodiments of the invention will be described in detail based on the drawings.

### (Embodiment 1)

### (Structure)

An exemplary embodiment of a vibration motor of the invention includes a stepping motor.

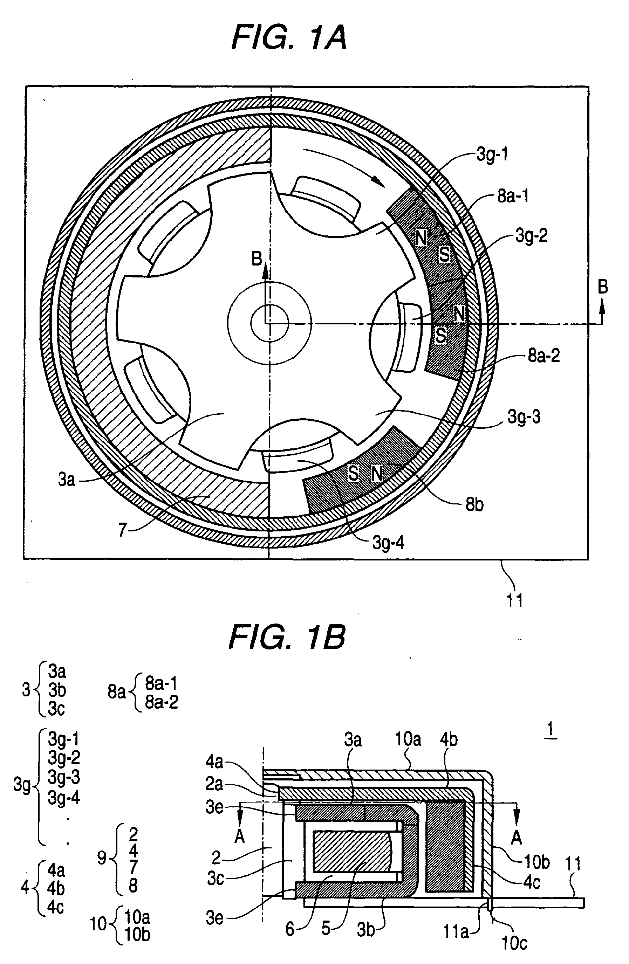

Figs. 1A and 1B are structural views of a vibrating motor using an outer rotor type stepping motor according to an exemplary embodiment of the invention. Fig. 1A is a sectional view along line A-A of Fig. 1B, and Fig. 1B is a sectional view along line B-B of Fig. 1A

A vibration motor 1 includes a rotating shaft having a third stator yoke 3c serving also as a bearing and a rotor frame 4. The diameter of the rotating shaft 2 is, for example, 0.8 mm, and the outer diameter of the third stator yoke 3c serving also as the bearing is, for example, 1.8 mm.

The third stator yoke 3c serving also as the bearing made of a magnetic material which is an oilless metal, is formed into a substantially cylindrical shape, (1) rotatably guides most of the side of the rotating shaft 2, (2) constitutes a part of a magnetic path through which the generated magnetic flux of a coil is transmitted, and (3) rotatably supports the vicinity of a fixed base of the rotor frame 4.

With respect to (2) described above, a stator yoke 3 includes, in Fig. 1B, an upper first stator yoke 3a, a lower second stator yoke 3b, and the third stator yoke 3c serving also as the bearing. With respect to the third stator yoke 3c serving also as the bearing, as shown in Fig. 1A, a center opening 3d of the first stator yoke 3a and the second stator yoke is fitted and fixed to small-diameter stepped parts 3e in the vicinities of upper and lower ends.

The first stator yoke 3a and the second stator yoke 3b are made of a magnetic material, and as shown in the plan view of Fig. 1 A, the whole is formed into a cup shape having an opening at the center, five substantially U-shaped cuts 3f are formed on the circumference to be opened at equal intervals, and the remaining parts between the substantially U-shaped cuts 3f are pole teeth 3g. The first stator yoke 3a and the second stator yoke 3b, which are formed in this way, are disposed vertically so that the mutual pole teeth 3g (the first pole teeth (3g-1, 3g-3, etc.) and second pole teeth (3g-2, 3g-4, etc.)) engage with each other in a comb teeth shape. A coil bobbin 6 housing a stator coil 5 is provided between the first stator yoke 3a and the second stator yoke 3b. The stator yoke 3 including the first stator yoke 3a, the second stator yoke 3b and the third stator yoke 3c is disposed so as to surround the periphery of the annular stator coil 5.

The coil bobbin 6 is made of a resin, has a C-shaped section, and is constructed to be annular when viewed on a plan view (not shown). An arbitrary wire rod can be used for the stator coil 5. Particularly, a self-bonding wire is desirable. In the case of embodiment 1, the stator coil 5 is formed as an integrated annular coil in such a manner that the self-bonding wire is wound around the annular coil bobbin 6, and heat is applied to fusion-bond the insulating coating. That is, the stator coil is constructed by winding the self-bonding wire and fusion-bonding it. By the fusion-bonding treatment of the insulating coating, the imbalance of arrangement between the wound windings is suppressed, and uniformity of the arrangement can be realized.

With respect to (3) described above, the rotor frame 4 is made of a metallic material. Preferably, it is made of, for example, SUS (stainless) 303. The section of the rotor frame 4 has a C shape having an opening at the center. The whole is constructed into a cup shape including a substantially circular disk part 4b having an opening part 4a at the center and a cylindrical part 4c provided to stand on its periphery at right angles.

With respect to the rotor frame 4, the opening part 4a is fitted and fixed to a small-diameter stepped part 2a of the rotating shaft 2. At that time, the rotor frame 4 is provided to be spaced from the first stator yoke 3a. Besides, the vicinity of an attachment base part of the rotor frame 4 to the rotating shaft 2 is axially supported by a shaft direction end surface of the third stator yoke 3c serving also as the bearing.

An arc-shaped eccentric weight 7 and at least two arc-shaped magnets 8a and 8b are provided on the inside surface of the cylindrical part 4c of the rotor frame 4. The eccentric weight 7 has a rectangular section equal to the sections of the magnets 8a and 8b shown in Fig. 1A, and when shown on a plan view, as shown in Fig. 1A, the eccentric weight is formed into a semi-arc shape. The center angle of the semi-arc shape is obtained in design, and in the case of embodiment 1, it is set to be 180 degrees.

The eccentric weight 7 is made of a metal, such as tungsten alloy, which is not harmful, has atmosphere resistance and has large mass. Besides, the eccentric weight 7 may be made of a magnetic material, and the rotation torque can be raised by providing irregularities with the pole teeth pitch of the stator yoke at the inside in the radial direction.

With respect to a vibration mechanism in which the rotor frame 4 with the eccentric weight 7 is provided to the rotating shaft 2, when the mass of the eccentric weight 7 is m (kg), the length from the center of gravity is r (m), and the rotation speed is ω, a vibration amount is obtained by mrω². It is said that when the vibration is preferable when the vibration amount is about 1 G. Thus, a sensible vibration becomes good at about ten thousand rpm. Thus, the outer rotor type in which the length from the center of gravity is long is more advantageous than the inner rotor type.

The magnet 8 is made of an arbitrary magnetic material. Preferably, it is made of a neodymium (Nd-Fe-B) alloy magnet, a bonded magnet (compound magnet formed by solidifying magnetic powder with a binder). The magnet 8 can be constructed of one magnet at minimum. In the case of one magnet, the construction is made such that magnetization is performed to provide multi-poles, and only one pole of the magnetized multi-poles has the effect of a commutating pole. That is, the construction is made by adopting such means that only one pole is shifted in pole pitch as compared with the other poles, or only one pole is made to have a different gap from the pole tooth and is shifted.

A magnetic pole pair of a pair of an N pole and an S pole is made a unit, and the magnet 8 includes an arbitrary number of magnetic pole pairs. In this regard, "one-pole magnetization" at the time when magnetization is explained means "magnetization of one magnetic pole pair", and "multi-pole magnetization" means "magnetization of many magnetic pole pairs".

A mode in which three magnets each having one-pole magnetization are coupled to form one body is also included in the concept of "one arc-shaped magnet is magnetized to provide multi-poles".

Of course, the magnet 8 can be constructed of plural magnets. In the case of embodiment 1, an example in which the magnet 8 includes plural magnets is described.

In embodiment 1, the magnet 8 is divided in two, one of them is formed as the rotor magnet 8a, and the other is formed as the commutating-pole magnet 8b. The size of the magnet 8 is determined according to the torque required.

The magnetization direction of the magnet 8 can be set to be an arbitrary direction. Preferably, while the shaft is made the center, magnetization is performed to have NS or SN in the radial direction. That is, the magnet 8 has a monopole-magnetized surface (an N pole surface or an S pole surface).

Since the magnet 8 including the rotor magnet 8a and the commutating-pole magnet 8b are magnetized in the radial direction, the width of the magnetic pole, that is, the arc length in the case of embodiment 1 becomes short (as compared with one in which magnetization is performed in the circumferential direction), plural magnets can be closely disposed in the circumferential direction, and the magnetization at a fine pitch becomes easy. Thus, a step width can be made narrow, and accordingly, the outer diameter of the vibrating motor can be made small. Since the magnet including the rotor magnet 8a and the commutating-pole magnet 8b is magnetized in the radial direction, the adjustment of a stop position becomes easy.

The rotor magnet 8a has a rectangular section shown in Fig. 1B, and when shown on a plan view, it is formed into the arc shape as shown in Fig. 1 A. The rotor magnet 8a has an arc length corresponding to a pole teeth (for example, 3g-1, 3 g-2, ...) pitch of the stator yoke 3.

The commutating-pole magnet 8b is formed to have the magnetic flux amount larger than the rotor magnet 8a, has the same section as the rotor magnet 8a, and is formed, when shown on the plan view, into the arc shape shown in Fig. 1A. The commutating-pole magnet 8b has the arc length narrower than the pole teeth pitch of the stator yoke 3, and functions to shift the stop position of the rotor 9 after the exciting current of the stator coil 5 is cut. The rotor 9 includes the rotating shaft 2, the rotor frame 4, the eccentric weight 7, and the magnet 8.

The volume ratio of the eccentric weight 7 to the magnet 8 is, for example, about 2:1.

A case 10 is made of a nonmagnetic metal, for example, SUS (stainless) 303, and has a C-shaped section, and the whole is constructed to have a cup shape made up of a disk part 10a and a cylindrical part 10b provided to stand on its periphery at right angles. Projections 10c to be fixed to an interface board 11 by soldering or welding are provided on the end surface of the cylindrical part 10b. The case 10 is formed to have, for example, a diameter of 10 mm and a height of slightly less than 3 mm.

The interface board 11 is constructed such that an insulating film is provided on a metal plate, and a necessary wiring (feeder to a coil, etc.) and openings 11a for fitting the projections 10c are formed thereon. The second stator yoke 3b is fixed to the interface board 11 through the insulating film, and the projections 10c of the end surface of the cylindrical part 10b of the case 10 are fitted in the openings 11a and are soldered from the back surface. An external control circuit, a power supply and the like are connected to the wiring.

### (Drive Circuit)

The vibrating motor of the invention is controlled with speed characteristics such as acceleration, constant speed and deceleration. At the time of the acceleration, a slow start is made and the speed is increased up to the constant speed in, for example, 0.3 to 0.5 seconds. At the time of the constant speed, rotation is made at, for example, ten thousand rpm at which bodily sensation is good. It is said that an acceleration detector of a human being is a Pacini corpuscle. In general, it is said that the frequency of vibration easily sensed by this organ is in the range of about 100 to 300 Hz. Further, with respect to the range of vibration and the range of acceleration, in which vibration is certainly sensed and uncomfortable feeling is less, it is said that the frequency is in the range of 100 to 300 Hz and the acceleration is in the range of 0.2 to 2 G (gravitational acceleration).

However, as in the invention, when the size of the whole motor is made very small, and the single-phase stepping motor is used for the vibrating motor, as stated above, the conclusion obtained is that ten thousand rpm and 1 G are preferable.

When the acceleration of about 1 G is applied to the rotating shaft, the speed reaches the maximum speed. It is preferable that the falling deceleration time is as short as possible.

The acceleration is in the middle of speed increase to the maximum speed (constant speed), vibration by step driving does not become a serious problem. However, the deceleration is a process for the stop, the vibration becomes a problem. The exciting time depends on the maximum drive current. Thus, at the time of the acceleration and the time of the constant speed, in which the vibration does not become a serious problem, the maximum drive current is made a large current for high speed driving. At the time of the deceleration when the vibration becomes a problem, the maximum drive current is made a small current, and a stop with less vibration is performed.

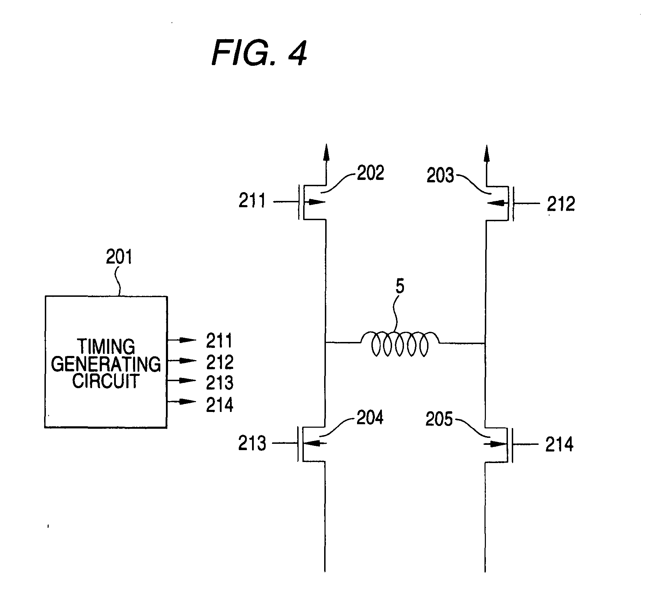

A current in which its direction is alternately changed is fed to the single-phase annular stator coil 5 by, for example, a drive circuit as shown in Fig. 4. Fig. 4 is a diagram of a circuit for controlling the drive current of the coil according to the invention.

A drive timing signal of a coil for a single-phase stepping motor of Fig. 4 is generated by a timing generation circuit, and is supplied to P-type MOSFETs 202 and 203 and N-type MOSFETs 204 and 205. Specifically, in a pulse section "a", a control signal 211 of the P-type MOSFET 202 and a control signal 214 of the N-type MOSFET 205 respectively come to have the ON potential, and current in one direction is supplied to the coil 5. Thereafter, in a next pulse section "b", a control signal 212 of the P-type MOSFET 203 and a control signal 213 of the N-type MOSFET 204 come to have the ON potential, and current in the reverse direction is supplied to the stator coil 5. Hereinafter, the same control is repeated.

Instead of the MOSFET, a switching element of a different transistor or the like can also be used.

The pulse signal for control is controlled by pulse width modulation (PWM), pulse frequency modulation (PFM), or pulse amplitude modulation (PAM) in order to perform the speed control.

### (Stop Position Control)

Since the vibrating motor of the invention uses the single-phase stator coil 5, after the drive current to the stator coil 5 is cut (OFF), the rotor must be moved so that the rotation direction becomes the same direction at the time of next starting.

For that purpose, the magnet 8 is formed into an arc shape on the circumference around the rotating shaft, and such magnets are disposed at, for example, two or more places. At that time, in order that the rotation direction can be determined, a combination of following means (1) to (4) is adopted.
(1) The magnet is made an arc-shaped rotor magnet with the same magnetization pitch as the yoke pole teeth, and a commutating-pole magnet in which a pitch is shifted in the rotation direction is provided.
(2) The magnetic flux amounts of two (rotor magnet and commutating-pole magnet) magnets are made irregular. Specifically, the setting is made to satisfy: the magnetic flux amount of the rotor magnet < the magnetic flux amount of the commutating-pole magnet.
(3) The commutating-pole magnet has a monopole-magnetized surface.
(4) The rotor magnet is made to have a magnetization pitch different from a pole teeth pitch.
   Besides, the stator yoke is designed as follows.
(5) The pole teeth phases of two stator yokes are shifted, or the pole tooth shapes of the stator yokes are made asymmetric.
(6) The gap between the pole teeth of the stator yoke and the rotor magnet is made irregular.

Hereinafter, a description will be made based on embodiment 1.

A description will be given to an operation of moving the rotor from the stop position to the starting position by the commutating-pole magnet 8b in order to make the rotation direction the same direction.

In the state of Fig. 1A, by current flowing through the stator coil 5, for example, the pole tooth 3g- and the pole tooth 3g-3 of the first stator yoke 3a are excited to have the S pole, and the pole tooth 3g-2 and the pole tooth 3g-4 of the second stator yoke 3b are excited to have the N pole. On the other hand, in the rotor magnet 8a, magnetic poles are formed in the rotation direction at the same pitch as the pitch of the pole teeth of the first stator yoke 3a and the second stator yoke 3b. The magnetization of the rotor magnet 8a is such that in an area 8a-1, the N pole is formed at the inside in the radial direction, and the S pole is formed at the outside, whereas in an area 8a-2, the S pole is formed at the inside in the radial direction, and the N pole is formed at the outside. In this state, the magnetic path is formed in the path ofN pole of the area 8a-1 →S pole of the area 8a-1 → N pole of the area 8a-2 → S pole of the area 8a-2 → N pole of the pole tooth 3g-2 → S pole of the pole tooth 3g-1 → N pole of the area 8a-1.

On the other hand, when the magnetic pole pitch of the rotor magnet 8a is made a standard, the commutating-pole magnet 8b is disposed to be shifted to a pitch inconsistent with that pitch, in the case of embodiment 1, to a pitch corresponding to the position shifted in the rotation direction (clockwise direction) by a minute distance from the half of the pole tooth 3g-3 of the first stator yoke 3a, and the position shifted in the rotation direction (clockwise direction) by a minute distance from the half of the pole tooth 3g-4 of the second stator yoke 3b. The commutating-pole magnet 8b is also magnetized similarly to the rotor magnet 8a. That is, for example, the S pole is formed at the inside in the radial direction, and the N pole is formed at the outside in the radial direction to be opposite thereto.

The magnetic flux amount of the commutating-pole magnet 8b is set to be larger than the magnetic flux amount of the rotor magnet 8a.

In this state, when the drive current of the stator coil 5 is cut (turned OFF), since the magnetic forces of both the magnets are generated in proportion to the magnetic flux amount, the commutating-pole magnet 8b is moved in a magnetically stable state, that is, a state in which magnetic resistance is small.

The S pole of the commutating-pole magnet 8b is moved to the magnetically stable position opposite to the pole tooth 3g-4.

In accordance with this, similarly to the commutating-pole magnet 8b, the rotor magnet 8a coupled with the rotor frame 4 is similarly moved in the rotation direction. The stop state is held in this state.

Next, when the stator coil 5 is driven again, the direction of the final drive current is stored as data, and based on the data, the direction of the drive current is determined so that the rotation direction becomes the same direction.

In addition to the above means of embodiment 1, means adopted for the stop position control is as follows:
(1) means for causing the rotor magnet to have the magnetization pitch different from the pole teeth pitch, and
(2) means for causing the magnetization pitch of the rotor magnet to be different from the pole teeth pitch of the stator yoke, and for changing the gap between the pole teeth area of the stator yoke and the magnetization pitch area of the rotor magnet in a partial area except the center part of one of the pole teeth area and the magnetization pitch area.

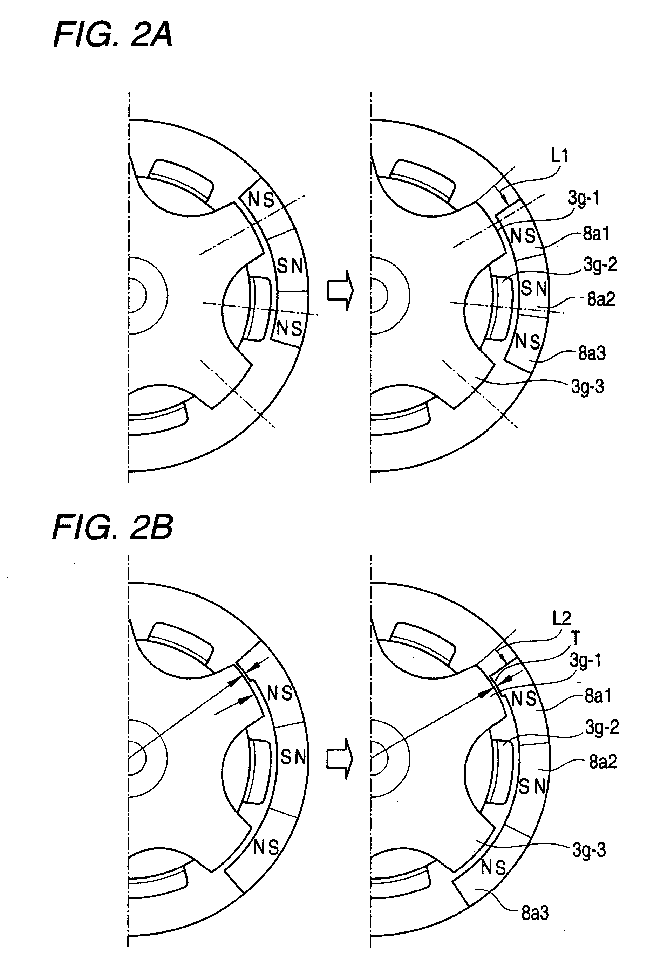

Figs. 2A and 2B are explanatory views of another stop position control means of an exemplary embodiment of the invention. Fig. 2A is an explanatory view of the above means (1) for causing the rotor magnet to have the magnetization pitch different from the pole teeth pitch, and Fig. 2B is an explanatory view of the above means (2) for causing the magnetization pitch and the gap to vary.

The rotor magnet 8 is formed by magnetizing one arc-shaped magnet to have multi-poles.

In Fig. 2A, the construction is made such that the length of three poles of continuous rotor magnets 8a1, 8a2 and 8a3 corresponds to the magnetic pitch of two protruding poles of the stator yoke. Fig. 2A shows a state in which the stator coil is driven by applying current. The N pole of the pole tooth and the S pole of the rotor magnet are opposite to each other. In this state, when the drive current of the stator coil is cut (OFF), the rotor magnet is moved by a distance (L1) in the rotation direction of an arrow so that adjacent magnetic poles of the rotor magnet are put in a magnetically stable state between the adjacent magnetic poles and the magnetic resistance becomes minimum. When the stator coil is next driven from this state, starting occurs in the initial rotation direction. '

In Fig. 2B, the magnetic pitch of the three poles of the continuous rotor magnets 8a1, 8a2 and 8a3 are made to correspond to the magnetic pole pitch of less than three protruding poles of the stator yoke, and a protrusion T to cause the gap between both (the pole tooth 3g-1 and the rotor magnet 8a1) to vary is provided in a remaining partial area of the inside area of the magnetic pole 8a1 except the center part. When the drive current to the stator coil is cut (OFF) in the drive state of Fig. 2(b), the rotor magnet is moved by a predetermined distance (L2) so that the rotor magnet 8a1 is put in a magnetically stable state, that is, the projection T of the rotor magnet 8a1 goes to the center of the magnetic pole 3g-1. When next starting occurs from this stop state, the starting occurs in the initial rotation direction.

Besides, a description will be given to, in the stator yoke, stop position control means for determining a rotation direction:
(1) means for causing the pole teeth shapes of the stator yoke asymmetric, and
(2) means for shifting the pole teeth phases of two stator yokes.

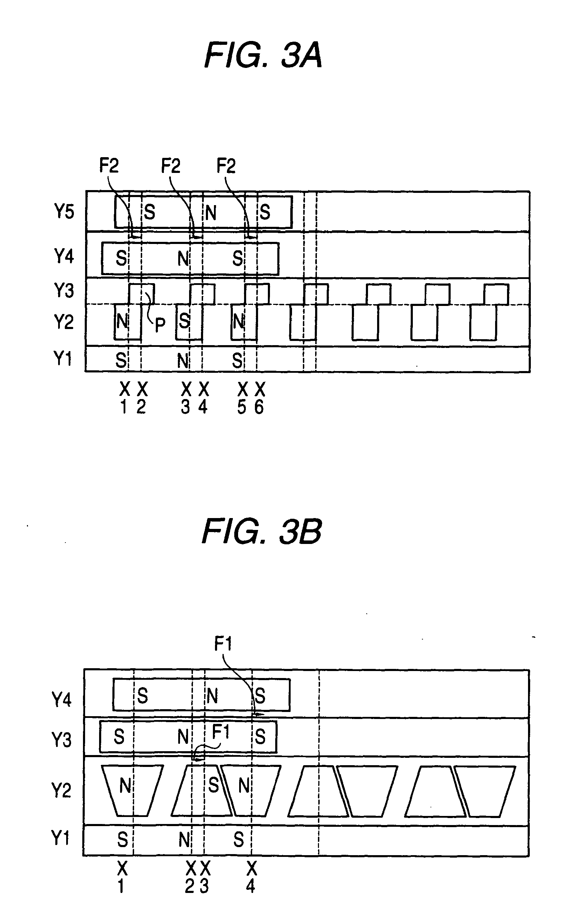

Figs. 3A and 3B are explanatory views of the stop position control means in the stator yoke of an exemplary embodiment of the invention. Fig. 3A is an explanatory view of the above means (1) for causing the pole teeth shapes of the stator yoke to be asymmetric, and Fig. 3B is an explanatory view of the means (2) for shifting the pole teeth phases of the two stator yokes.

In Fig. 3A, the rotor magnet has three poles (stage of Y4), the pole teeth (stages of Y2 + Y3) are formed to be asymmetric, X1 to X6 denote positions on a circumference in the rotation direction, and the pole teeth are shown at the stage of Y2 of the horizontal stage and the stage of Y3. When the pole teeth (stages of Y2 + Y3) are excited to have the polarities at the stage of Y2 by the drive current of the stator coil, the rotor magnet is magnetically held at the position where the magnetic poles are as indicated at the stage of Y4. When the drive current is cut (OFF) in this state, since a region of the magnetic pole opposite to the rotor magnet becomes a region P at the stage of Y3, the rotor magnet is moved by a distance F2 to the position at the stage of Y5 so that a magnetically stable state to this region P occurs. In this state, since the magnetic pole at the stage of Y2 is shifted from the magnetic pole at the stage of Y5 by F2, when drive current is applied to the stator coil for starting, the start torque in the right direction in Fig. 3A is applied to the rotor magnet, and it can be rotated in the predetermined direction.

In Fig. 3B, the rotor magnet is formed to have three poles (stage of Y3) at an equal pitch, the phases of the pole teeth (stage of Y2) are shifted, X1 to X4 denote positions on the circumference in the rotation direction, and the pole teeth are shown at the stage of Y2. When the pole teeth (stage of Y2) are excited by the drive current of the stator coil to have the polarities at the stage of Y2, the rotor magnet is magnetically held at the position where the magnetic poles are as indicated at the stage of Y3. In this state, when the drive current is cut (OFF), the rotor magnet is moved by an arrow F 1 so that the respective magnetic poles of the rotor magnet at the stage of Y3 are put in a magnetically stable state to the pole teeth at the stage of Y2. As a result, with respect to the magnetic poles of the pole tooth at the X1 position and the pole tooth at the X4 position, the magnetic pole positions of the opposite magnetic poles of the rotor magnet are shifted in the right direction in Fig. 3B by F1 as indicated at the stage of Y4. When the drive current is applied to the stator coil for starting, as the total action, the start torque in the right directed in Fig. 3B is applied to the rotor magnet, and it can be rotated in the predetermined direction.

In Figs. 3A and 3B, the stage of Y1 indicates positions of magnetic poles of the rotor magnet corresponding to the magnetic poles of the pole teeth at the time the current is applied to the stator coil.

In addition to the above description, means for moving the position of the rotor so as to enable rotation in which the rotation direction is made the initial direction at the next starting, that is, means for moving the rotor into a magnetically stable state can be adopted.

### (Effects of Embodiment 1)

Since the outer rotor type incorporates the eccentric weight in the same outermost rotation area as the magnet, the housing space of the eccentric weight can be shared with the magnet. Since the eccentric weight is disposed at the outermost side, the radius becomes long, strong vibration can be generated, and parts exposed to the outside can be removed. Besides, since the stepping motor has no brush, similarly to another brushless motor, the necessity of maintenance almost disappears, and its lifetime becomes long.

Besides, when the rotation speed is controlled to be synchronous with the input pulse, the vibration amount can be linearly adjusted, and the stop time can be shortened.

Because of the single phase, drive pulse current in which direction is alternately inverted is inputted to the single-phase stator coil wound around the stator yoke. Since this coil has the single phase, the occupied space becomes small, and the thickness is reduced. Besides, with respect to the control circuit, since an inverting circuit of current becomes basic, the circuit can be simply constructed.

Since the third stator yoke to couple the first stator yoke with the second stator yoke is made of a magnetic material so that it serves also as the bearing, the occurrence of magnetic leakage flux is suppressed, the magnetic path passing through the bearing can be constructed, and the generated magnetic flux can be effectively used.

The magnet is formed into the arc shape on the circumference with the rotating shaft as the center, and is disposed at two or more places. At that time, the combination of the following means of (1) to (4) is adopted so that the rotation direction can be determined.
(1) The magnet is formed into the arc-shaped rotor magnet with the same magnetization pitch as the yoke pole teeth, and the commutating-pole magnet in which the pitch is shifted in the rotation direction is provided.
(2) The magnetic flux amounts of the two (rotor magnet and commutating-pole magnet) magnets are made irregular. Specifically, the magnetic flux amount of the rotor magnet is set to be smaller than the magnetic flux amount of the commutating-pole magnet.
(3) The commutating-pole magnet has a monopole-magnetized surface.
(4) The rotor magnet is made to have the magnetization pitch different from the pole teeth pitch.

Besides, the magnet is magnetized in the radial direction. In that case, plural magnets are closely disposed in the circumferential direction. By this, magnetic pole arrangement at a fine pitch becomes easy. Further, the arrangement of an odd number of poles becomes possible, the space is effectively used, and efficient motor design becomes possible.

The eccentric weight is made of a magnetic material, and the irregularities having a pitch substantially equal to the yoke pole teeth are provided on the surface opposite to the yoke. By this, the efficiency can be increased.

With respect to the stator yoke, the pole teeth phases of two stator yokes are shifted or the pole teeth shapes of the stator yoke are made asymmetric, so that the rotation direction can be determined.

The gap between the pole teeth of the stator yoke and the rotor magnet is made irregular, so that the rotation direction can be determined.

The self-bonding wire is used for the stator coil. By this, reduction in thickness, improvement in quality (improvement in swelling), high density winding (aligned winding) are achieved.

### (Embodiment 2)

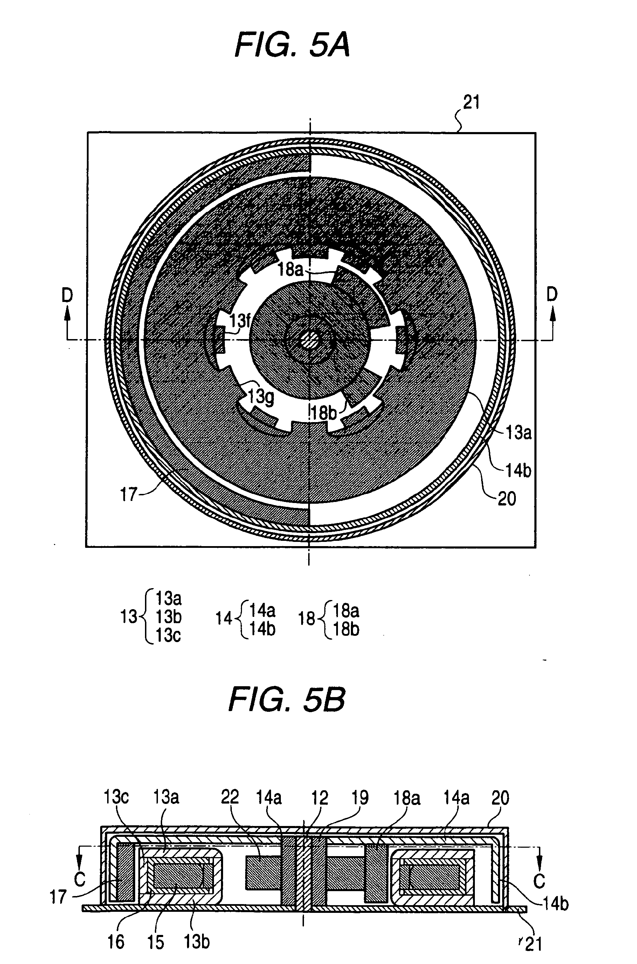

Figs. 5A and 5B are structural views of an inner rotor type vibrating motor of an exemplary embodiment of the invention. Fig. 5A is a sectional view along line C-C of Fig. 5B, and Fig. 5B is a sectional view along line D-D of Fig. 5A.

A bearing 12 is vertically provided on an interface board 21 like the one shown in embodiment 1, a cylindrical rotating shaft 19 is rotatably provided on the bearing 12, a supporting body 22 is fixed to the rotating shaft 19, and a magnet 18 is provided at the tip of the supporting body 22. The magnet 18 includes a rotor magnet 18a and a commutating-pole magnet 18b. In the case of embodiment 2, although the magnet 18 includes two magnets, the magnet can be basically constructed of one or more magnets. The magnetization of the rotor magnet 18a and the commutating-pole magnet 18b; the magnetic pole pitch and the like are constructed similarly to the case of embodiment 1.

A stator is arranged such that a single-phase annular stator coil 15 is provided in a coil bobbin 16 which has a C-shaped section and is annular when shown on a plan view, a stator yoke 13 is provided so as to surround the coil bobbin 16, and pole teeth 13g of the stator yoke 13 are combined in a comb teeth shape and are disposed. The stator yoke 13 is attached to the same interface board 21 as the case of embodiment 1.

The stator yoke 13 includes, as shown in Fig. 5B, an upper first stator yoke 13 a, a lower second stator yoke 13b, and a third stator yoke 13c coupling both.

Each of the first stator yoke 13a and the second stator yoke 13b has a pole tooth at the inside in the radial direction. The shape of the pole tooth can be set to be arbitrary.

In addition to the supporting body 22, a rotor frame 14 is fixed to the rotating shaft 19. Similarly to embodiment 1, the rotor frame 14 is made of a metallic material. Preferably, it is made of, for example, SUS (stainless) 303. The section of the rotor frame 4 has a C shape having an opening 14c at the center. The whole is constructed into a cup shape having a substantially circular disk part 14a having the opening 14c at the center and a cylindrical part 14b provided to stand on its periphery at right angles.

An eccentric weight 17 is fixed to the inside of the cylindrical part 14b. The eccentric weight 17 is formed into an arc shape with a center angle of 180 degrees. The center angle of the eccentric weight 17 can be arbitrarily designed. The eccentric weight 17 is disposed outside the stator yoke 13 in the radial direction to provide a gap between it and the stator yoke 13.

Besides, the eccentric weight 17 is made of a magnetic material, irregularities with the pole teeth pitch of the stator yoke 13 is provided at the inside in the radial direction, while pole teeth opposite to the inside pole teeth are formed at the outside of the stator yoke 13 in the radial direction, and the rotation torque can be improved.

As the need arises, a case 20 equal to that shown in embodiment 1 is disposed outside the rotor frame 14 through the gap so as to cover the rotor frame 14.

### (Effects of Embodiment 2)

Since only the eccentric weight is provided on the rotor frame, and the eccentric weight is provided at the outermost side from the rotating shaft 19, a large vibration can be obtained.

Further, since the rotation areas of the magnet and the eccentric weight are made different from each other, the magnet and the pole teeth can be freely designed without considering the eccentric weight.

With respect to the pole teeth of the stator yoke, since the radius from the rotating shaft becomes long by the magnet provided to the supporting body, the number of the pole teeth can be increased, and as a result, the number of steps is increased, and precise control becomes possible.

The magnet, the stator yoke, and the eccentric weight are arranged in a line, and a flat and thin structure can be made.

### (Embodiment 3)

With respect to a portable terminal apparatus such as, for example, a cellular phone or a pager, one including a vibration generating device for incoming call indication is increased in number. In the case of the cellular phone, in general, although a feeding terminal of a vibrating motor is provided on a main board, the vibrating motor itself is directly fixed to a frame. A fixed place is an end opposite to the interface connector side and in the vicinity of an antenna. Since a housing space becomes a narrow space between the main board and the frame, it is necessary that an occupied space of the vibrating motor has an efficient shape so that it is contained in the narrow space.

In the vibrating motor using the stepping motor according to the invention, since the magnet with the axial center and the eccentric weight are provided on the same rotation surface, while high speed rotation is achieved and strong vibration is generated, a flat cylindrical shape can be formed.

Since the portable terminal apparatus of the invention uses the above vibrating motor, while the vibrating motor is contained in the efficient small occupied space of the flat cylindrical shape, the strong vibration required by the apparatus can be generated.

While the present invention has been particularly shown and described with references to embodiment thereof, it will be understood by those skilled in the art that various changes in form and details may be made therein without departing from the spirit and scope of the invention as defined by the appended claims.

The present application claims foreign priority based on Japanese Patent Application No. JP2004-257605 filed on September 3 of 2004, the contents of which is incorporated herein by reference.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A vibrating motor (1) comprising:
a single-phase annular stator coil (5);
a stator yoke (3) disposed to surround a periphery of the single-phase annular stator coil (5), the stator yoke (3) having pole teeth (3g); and
an interface board (11) fixing the stator yoke (3) and having a wiring connected to the single-phase annular stator coil (5),
**characterized in that** the vibration motor (1) further comprises a rotor (9) comprising a rotating shaft (2), a magnet (8) opposite to the pole teeth (3g), and an eccentric weight (7).

2. The vibrating motor (1) according to claim 1, wherein
the magnet (8) comprises: an arc-shaped rotor magnet (8a-1 + 8a-2) with a magnetization pitch substantially equal to a pole teeth pitch of the stator yoke (3); and a commutating-pole magnet (8b) with another magnetization pitch shifted in a rotation direction of the rotor with respect to the pole teeth pitch of the stator yoke (3), and
the commutating-pole magnet (8b) has a magnetic flux amount larger than that of the arc-shaped rotor magnet (8a-1 + 8a-2).

3. The vibrating motor (1) according to claim 2, wherein the commutating-pole magnet (8b) has a surface opposite to the pole teeth, and the surface is one of an N pole and an S pole

4. The vibrating motor (1) according to claim 1, wherein the magnet (8) comprises an arc-shaped rotor magnet (8a1 + 8a2 + 8a3) with a magnetization pitch different from a pole teeth pitch of the stator yoke (3), and a gap between a pole teeth area of the stator yoke (3) and a magnetization pitch area of the arc-shaped rotor magnet (8a1 + 8a2 + 8a3) is changed in a partial area (T) of a remaining portion except a center portion of one of the pole teeth area and the magnetization pitch area.

5. The vibrating motor (1) according to any one of claims 1 to 4, wherein the magnet (8) is magnetized in a radial direction.

6. The vibrating motor (1) according to any one of claims 1 to 5, wherein the single-phase annular stator coil (5) is formed by winding and fusion-bonding a self-bonding wire.

7. The vibrating motor (1) according to any one of claims 1 to 6, wherein the rotor (9) further comprises a rotor frame (4) around the rotating shaft (2), the rotor frame (4) having the eccentric weight (7) to be positioned around the rotating shaft (2) and outside the stator yoke (3).

8. The vibrating motor (1) according to any one of claims 1 to 7, wherein
the stator yoke (3) comprises: a first stator yoke (3a) having first pole teeth (3g-1 and 3g-3); a second stator yoke (3b) having second pole teeth (3g-2 and 3g-4); and a third stator yoke (3c) to position and couple the first and second stator yokes (3a + 3b) so that the first and second pole teeth (3g-1, 3g-2, 3g-3 and 3g-4) engage with each other in a comb teeth shape, and
the third stator yoke (3c) comprises a bearing (3e) of the rotating shaft (2).

9. The vibrating motor (1) according to claim 8, wherein phases of the first and second pole teeth (3g-1, 3g-2, 3g-3 and 3g-4) are shifted so that a rotation direction of the rotor (2) is determined.

10. The vibrating motor (1) according to claim 8, wherein a first pole tooth shape of the first stator yoke (3a) and a second pole tooth shape of the second stator yoke (3b) are asymmetric so that a rotation direction of the rotor (2) is determined.

11. The vibrating motor (1) according to any one of claims 8 to 10, wherein
the magnet (8) comprises: an arc-shaped rotor magnet (8a-1 + 8a-2); and a commutating-pole magnet (8b), and
the rotor (9) further comprises a rotor frame (4) around the rotating shaft (2), the rotor frame (2) having: the eccentric weight (7); the arc-shaped rotor magnet (8a-1 + 8a-2); and the commutating-pole magnet (8b).

12. The vibrating motor (1) according to any one of claims 8 to 11, wherein the eccentric weight (7) comprises a magnetic material and has irregularities on a surface opposite to the stator yoke (3), the irregularities having a pitch substantially equal to the pole teeth (3g) of the stator yoke (3).

13. A portable terminal apparatus comprising a vibrating motor according to any one of claims 1 to 12.
